# EUROPEAN PATENT APPLICATION

(11) **EP 1 983 596 A2**
(43) Date of publication of application: **22.10.2008**
(21) Application number: 08153589.0
(22) Date of filing: 28.03.2008
(51) Int. Cl.: H01M 8/00, H01M 8/04

(54) **Heat and power system combining a solid oxide fuel cell stack and a vapor compression cycle heat pump**

(30) Priority: 18.04.2007 US 787998
(71) Applicant: Delphi Technologies, Inc., Troy, Michigan 48007 (US)
(72) Inventor: Kelly, Sean M., Pittsford, NY 14534 (US); Faville, Michael T., Geneseo, NY 14454 (US)
(74) Representative: Denton, Michael John

(57) **Abstract**

A Combined Heat and Power System ("CHPS") includes a solid oxide fuel cell system and a vapor compression cycle heat pump. The CHPS improves the overall efficiency of a CHP system with respect to conversion of fuel energy to usable heat and electrical energy without need for an accessory burner-heat exchanger system. The compressor motor of the heat pump is powered by a portion of the electricity generated by the SOFC, and the thermal output of the heat pump is increased by abstraction of heat from the SOFC exhaust. This integration allows for novel and complementary operation of each type of system, with the benefits of improved overall fuel efficiency for the improved CHP system.

## Description

### TECHNICAL FIELD

The present invention relates to fuel cells; more particularly, to an Auxiliary Power Unit (APU) including a solid oxide fuel cell (SOFC) system; and most particularly, to a Combined Heat and Power System (CHPS) for producing electric power and heating through combination of an SOFC system and a vapor-compression-cycle heat pump (VCCHP).

### BACKGROUND OF THE INVENTION

Solid Oxide Fuel Cell systems are high-efficiency generators of electric power from a variety of fuels including Natural Gas, Liquified Petroleum Gas (LPG), Ethanol, and other hydrocarbon and non-hydrocarbon fuels. Due to the high operating temperature of an SOFC (700-900°C), the tail pipe exhaust is generally also at a high temperature. A known state-of-the-art integration of SOFC systems is as part of a Combined Heat and Power System (CHPS). Prior art CHP systems use the electrical output of the SOFC system directly, and also utilize the energy leaving the SOFC system in the form of hot exhaust for heating air or water for space heating or for heating water for domestic usage (showers, etc).

No fuel cell system is 100% efficient, so there will always be heat leaving in the SOFC exhaust. For a typical 1 kW electrical service demand (e.g., a small residence), the heating or thermal needs are typically in the range of 5-10 kW. If the SOFC system has a reasonably good electrical efficiency, for example 33%, the heat output for 1 kW net electric output is 2 kW. Since 2 kW is much less thermal energy than desired, auxiliary direct-fueled condensing or non-condensing burner-heat exchangers are commonly used to make up the difference. The best of these are 80-90% efficient in converting fuel to electric and thermal energy.

What is needed in the art is an improved CHP system with increased overall fuel efficiency.

It is a principal object of the present invention to increase the fuel efficiency of a CHP system.

### SUMMARY OF THE INVENTION

Briefly described, the invention seeks to improve the overall efficiency of a CHP system with respect to conversion of fuel energy to usable heat and electrical energy. In addition, a method to flexibly close the gap between thermal energy available vs. thermal energy demand is presented without the need for an accessory burner-heat exchanger system. The invention is directed to an improved CHP system which combines a VCCHP system with an SOFC system, both of which are well known in the art, for application as a combined CHP system wherein the compressor motor of a heat pump is powered by a portion of the electricity generated by the SOFC, and wherein the thermal output of the heat pump is increased by abstraction of heat from the SOFC exhaust. This integration allows for novel and complementary operation of each type of system, with the benefits of improved overall fuel efficiency for the improved CHP system.

### BRIEF DESCRIPTION OF THE DRAWINGS

The present invention will now be described, by way of example, with reference to the accompanying drawings, in which:
FIG. 1 is a schematic drawing of a first exemplary CHP system in accordance with the invention;
FIG. 2 is a diagram of a second exemplary CHP system wherein the evaporator section of a VCCHP is interfaced with system process air;
FIG. 3 is a diagram of a third CHP system embodiment wherein the evaporator section of a VCCHP is interfaced only with SOFC exhaust which is tempered by mixing with intake system process air;
FIG. 4 is a table showing total percent efficiency of a CHP system in accordance with the invention as a function of electric demand and compressor power; and
FIG. 5 is a table showing kW thermal output of a CHP system in accordance with the invention as a function of electric demand and compressor power.

Corresponding reference characters indicate corresponding parts throughout the several views. The exemplifications set out herein illustrate currently preferred embodiments of the invention, and such exemplifications are not to be construed as limiting the scope of the invention in any manner.

### DESCRIPTION OF THE PREFERRED EMBODIMENTS

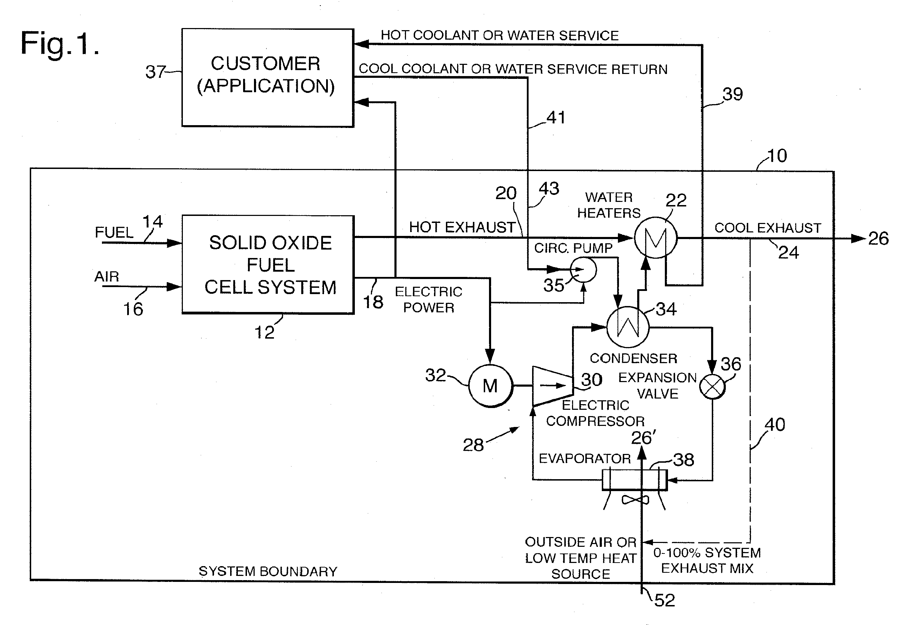

Referring to FIG. 1, a schematic drawing of a first exemplary CHP system embodiment 10 in accordance with the invention is shown. A solid oxide fuel cell system 12 as is well known in the fuel cell arts is provided with a supply of fuel 14 and air 16. Fuel 14 is typically a hydrocarbon fuel conventionally available in liquid or gaseous form such as an alkane or alcohol. It is also known to fuel an SOFC directly with ammonia, obviating the need for a reformer. SOFC 12 provides electric power 18 and also emits a hot exhaust 20 that is directed through one side of a heat exchanger 22, creating a partially-cooled exhaust 24 that may be discharged to atmosphere 26.

A VCCHP system 28 includes conventionally a compressor 30 driven by an electric motor 32; a heat exchanger condenser 34; an expansion valve 36; and a heat exchanger evaporator 38. VCCHP system 28 may be of a prior art type with a suitable refrigerant (first working medium). As used herein, a "working" medium is a fluid medium recirculated in a closed loop. The first working medium is pumped as a gas through a first side of heat exchanger/condenser 34 wherein the medium is condensed to a heated liquid wherein the heat of vaporization is recovered. A second thermal carrier fluid medium 41 is pumped by a recirculation pump 35 through the second side of heat exchanger/condenser 34, abstracting heat from the hot first working medium, and thence through a customer application 37 requiring heated fluid 39, for example, hot air, hot water, or hot refrigerant. The second fluid medium may be in a closed system wherein heat is extracted therefrom in customer application 37 and the medium is then returned 43 for reheating; or application 37 may consume the heated second working medium, in which case fresh cold medium is supplied to recirculation pump 35. Advantageously, the second fluid medium is also passed through the second side of heat exchanger 22 wherein the second fluid medium is further heated by abstraction of waste heat from hot SOFC exhaust 20. The thermal output of VCCHP system 28 is thus augmented by heat from exhaust 20 in accordance with the invention, and thus the thermal efficiency of the overall CHP system is substantially increased.

In addition, a portion or all 40 the balance of the SOFC exhaust heat 24 may be channeled to the evaporator 38 of the heat pump system, thus providing an additional temperature sink for the remainder of the SOFC heat before final exhaust 26'. This provides additional efficiency, and/or expanded operating range for lower outdoor or low temperature reservoir temperatures.

In operation, electric compressor motor 32 is driven by a portion of the electric power 18 of SOFC system 12. The heat pump system drives evaporator 38 to a temperature below the temperature of a low temperature reservoir 52 or SOFC exhaust 40, causing heat to flow to the first working medium. The compression process condenses the first working medium and increases the temperature thereof to a temperature above a high temperature reservoir. The condensed high temperature medium then passes through condenser 34 which has heat exchange with a high temperature reservoir defining a thermal carrier medium, for example, space heating air or coolant or water for circulation heating in customer application 37. A separate water loop may be channeled through the condenser to handle domestic water needs (showers, drinking, etc.). In this way, heat from both the low temperature reservoir 52,40 and electric power 18 are channeled to the high temperature reservoir (coolant, water, or air 39). The amount of heat transferred from the low temperature reservoir to the high temperature reservoir is a function of the amount of compression power (assuming non-limiting cases in heat exchangers etc.).

For a heat pump system, a coefficient of performance (COP) is defined as the heat output to the high temperature reservoir divided by the heat, or work, driven into the refrigerant by the compressor. COPs for good heat pump systems are typically between 2 and 3. This means that 2 to 3 times the electric power (minus motor losses) driven to the compressor is driven to the high temperature reservoir (air, coolant, or water). This is a primary efficiency improvement for the utilization of fuel power to heat power.

Heat exchanger 22 may be separate from VCCHP system 28 or may be an integrated heat exchanger with condenser/exchanger 34 used to transfer the SOFC exhaust heat to the same heating air, coolant, or heating water. Since the SOFC exhaust 20 is at a higher temperature than the condenser 34 of the heat pump system, additional heat flows from the exhaust of the SOFC to the coolant. Where constant massflow of coolant or air is desired at a prescribed temperature, the heat pump compressor may be driven at variable speed to adjust the heating load depending on demand or operating conditions. By this method, a novel simple control may be obtained for either constant temperature or constant massflow heating needs under variable demand or environmental conditions.

Note that with the addition of a compressor reversing valve (not shown but well known in the prior art) in the refrigerant loop of VCCHP 28, the heat pump may be reversed, and condenser 34 becomes the evaporator, and evaporator 38 becomes the condenser. Heat exchanger 22 is bypassed, and the hot SOFC exhaust is not used with the VCCHP 28; SOFC electrical output 18, however, continues to power the pump compressor. In this way, electrical air conditioning, or water or coolant chilling, may be provided during warm months where heating is not needed. This provides additional features to the customer not provided by any prior art CHP system, all of which are limited to electric power generation and heating.

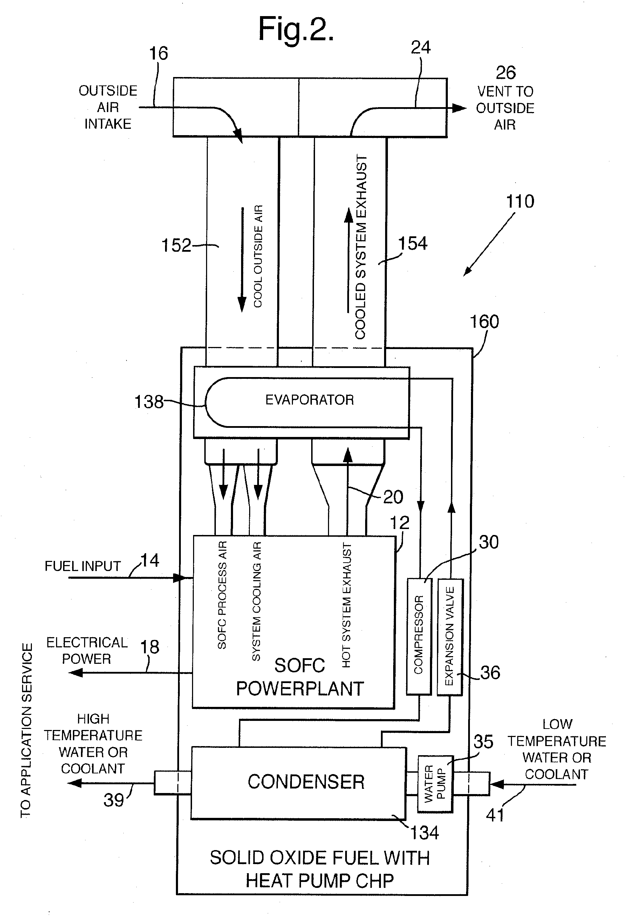

FIG. 2 shows an exemplary second embodiment 110 of an SOFC Heat Pump CHP system in accordance with the invention. A key feature is the integration of the heat exchanger for evaporator 138 with the process air inlet and exhaust streams 152,154, respectively, of the device. Thus, separate heat exchanger 22 (FIG. 1) is omitted, and all heat from SOFC exhaust 20 is entered into the heat pump through extraction by evaporator 138.

An SOFC system normally intakes both process air and auxiliary cooling air (cabinet, electronic, and space cooling) from an external source and vents the hot exhaust to a suitable outside air space. In this embodiment, the evaporator also draws heat out of the process air 152 coming into the system. This low temperature air is used for cooling and SOFC system operation. The lower temperature process air intake 152 improves the efficiency of the SOFC air pumps and blowers as well as improving the cooling of onboard electronics and other devices. The heat entering evaporator 138 from this stream becomes available to the application at the condenser 134 through the heat pump system operation. The hot system exhaust stream 20 also travels through evaporator 138 giving additional heat input to the heat pump process (analogous to stream 40 in FIG. 1). This integration allows for access to the low temperature heat source in the outside air without having to place an evaporator outside of the system or appliance boundary 160, or directly outdoors. This integration also improves system cooling and allows for efficient use of system exhaust heat. The specifics of the ducting and heat exchanger technology are not critical to the invention, but use of concentric inlet and outlet ducts and multi-pass heat exchangers enhances the functionality and performance and are obvious to those skilled in the art.

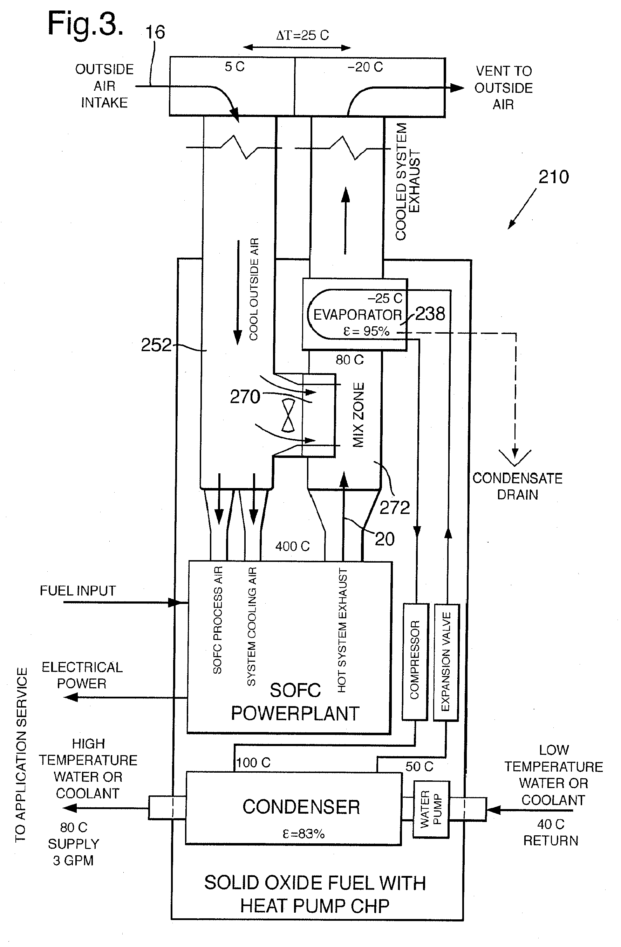

Referring to FIG. 3, an exemplary third embodiment 210 in accordance with the invention is generally similar to first embodiment 110 but outside air 16 bypasses evaporator 238 and passes directly to SOFC 12 as process air and cooling air. Additionally, air intake plenum 252 includes a diversion plenum 270 connecting the outside air 16 with hot SOFC exhaust 20 such that a portion of the intake air may be diverted ahead of SOFC 12 and mixed with the SOFC exhaust in a mixing zone 272 to adjust the temperature of heating gas being passed through evaporator 238. Exemplary steady-state operating temperatures are provided for various locations in system 210.

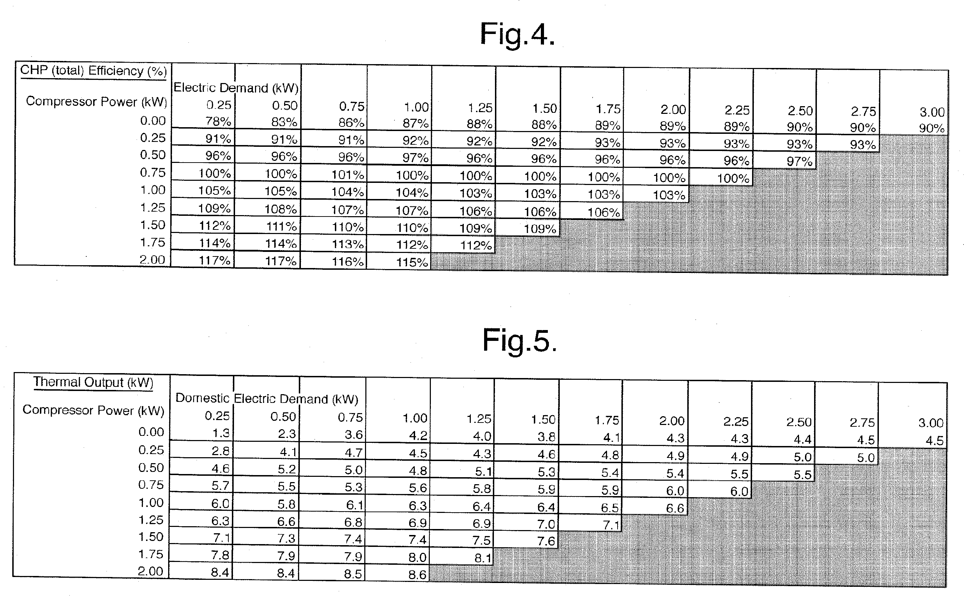

System efficiencies and thermal outputs of a combined SOFC and VCCHP CHP system in accordance with the invention are shown in FIGS. 4 and 5 for variable electric demand. Note that the first row of these tables, wherein compressor input is 0 kW, represents a prior art CHP system wherein the heat in the system exhaust is recovered via an auxiliary burner-heat exchanger. Thus it is seen that for the typical prior art CHP case without a heat pump, thermal output is low at low electric loads, and is insufficient to meet high thermal demand at any electrical load; hence the need for the supplemental burner. In the present invention, the thermal demand may be met with high efficiency at low to moderate electrical demand through use of a VCCHP. This is a primary advantage of the invention.

While the invention has been described by reference to various specific embodiments, it should be understood that numerous changes may be made within the spirit and scope of the inventive concepts described. Accordingly, it is intended that the invention not be limited to the described embodiments, but will have full scope defined by the language of the following claims.

## Claims

1. A combined heat and power system for generating electricity and for heating a thermal carrier medium, comprising:
a) a solid oxide fuel cell system for generating electricity and an exhaust stream;
b) a heat pump including a compressor for pressurizing and heating a working medium, a condenser for liquefying said pressurized working medium and for heating said thermal carrier medium, and an expansion valve and evaporator for vaporizing and cooling said working medium; and
c) a heat transferring system exposed to said exhaust stream for transferring heat therefrom into said thermal carrier medium.

2. A system in accordance with Claim 1 wherein said compressor includes and electric motor powered by a portion of said SOFC system-generated electricity.

3. A system in accordance with Claim 1 wherein said heat transferring system includes a first heat exchanger wherein said working medium is passed across a first side thereof and wherein said thermal carrier medium is passed across a second side thereof for abstracting heat from said working medium.

4. A system in accordance with Claim 3 wherein said first heat exchanger is integral with said compressor.

5. A system in accordance with Claim 3 wherein said heat transferring system includes a second heat exchanger wherein said exhaust stream is passed across a first side thereof and wherein said thermal carrier medium is passed across a second side thereof for abstracting heat from said exhaust stream.

6. A system in accordance with Claim 1 wherein said heat transferring system includes said evaporator, wherein heat from said exhaust stream is transferred into said working medium and thence into said thermal carrier medium.

7. A system in accordance with Claim 6 wherein said evaporator includes a third heat exchanger.

8. A system in accordance with Claim 1 wherein said solid oxide fuel cell system is provided with a stream of intake air, and wherein said evaporator is disposed in said intake air stream and also in said exhaust stream.

9. A system in accordance with Claim 1 wherein said solid oxide fuel cell system is provided with a stream of intake air, and wherein said system is further provided with a diverter for selectively diverting a portion of said intake air stream into said exhaust stream to form a mixture thereof, and wherein said evaporator is disposed in a flow stream of said mixture.

10. A system in accordance with Claim 1 wherein said thermal carrier medium is selected from the group consisting of air, water, and coolant.

11. In a combined heat and power system for generating electricity and for heating a thermal carrier medium wherein the system includes a solid oxide fuel cell stack for generating electricity and an exhaust stream; a heat pump including a compressor for pressurizing and heating a working medium, a condenser for liquefying the pressurized working medium and for heating the thermal carrier medium, and an expansion valve and evaporator for vaporizing and cooling the working medium; and
a heat transferring system exposed to the exhaust stream for transferring heat therefrom into the thermal carrier medium,
a method for operating the system, comprising the steps of:
a) pressurizing and heating said working medium in said condenser;
b) generating said exhaust stream;
c) passing said thermal carrier medium over said condenser to abstract heat therefrom; and
d) passing at least a first portion of said exhaust stream over said evaporator to transfer heat from said exhaust stream into said working medium.

12. A method in accordance with Claim 11 comprising the further step of passing said thermal carrier medium and at least a second portion of said exhaust stream across opposite sides of a heat exchanger to transfer heat from said exhaust stream into said thermal carrier medium.

13. A method in accordance with Claim 11 comprising the further steps of:
a) prior to said step of passing at least a first portion of said exhaust stream over said evaporator, mixing air with said at least a first portion of said exhaust stream to form a mixture thereof; and
b) passing said mixture over said evaporator.
